Europäisches Patentamt

European Patent Office

Office européen des brevets

(11) Numéro de publication: **0 397 547 B1**

(12) **FASCICULE DE BREVET EUROPEEN**

(45) Date de publication de fascicule du brevet: **14.09.94** (51) Int. Cl.⁵: **G01S 15/42**

(21) Numéro de dépôt: **90401187.1**

(22) Date de dépôt: **02.05.90**

(54) **Sonar d'évitement d'objets sous-marins sub-surface.**

(30) Priorité: **10.05.89 FR 8906105**

(43) Date de publication de la demande:
**14.11.90 Bulletin 90/46**

(45) Mention de la délivrance du brevet:
**14.09.94 Bulletin 94/37**

(84) Etats contractants désignés:
**DE DK GB SE**

(56) Documents cités:
EP-A- 0 016 716     WO-A-85/05694
DE-B- 1 042 437     FR-A- 2 094 091
FR-A- 2 241 078     US-A- 2 787 776
US-A- 3 579 180     US-A- 3 652 978

(73) Titulaire: **THOMSON-CSF**
**173, Boulevard Haussmann**
**F-75008 Paris (FR)**

(72) Inventeur: **Peynaud, François**
**THOMSON-CSF**
**SCPI**
**Cédex 67**
**F-92045 Paris la Défense (FR)**

(74) Mandataire: **Desperrier, Jean-Louis et al**
**THOMSON-CSF**
**SCPI**
**B.P. 329**
**50, rue Jean-Pierre Timbaud**
**F-92402 Courbevoie Cédex (FR)**

## Description

La présente invention se rapporte à la détection et à la localisation d'objets sous-marins situés au voisinage de la surface de l'eau au moyen d'un sonar actif frontal monté sur un bateau de surface.

Les sonars actuellement sur le marché sont peu adaptés à la détection d'objets sous-marins sub-surface pour différentes raisons : leur directivité en site n'est, en général, pas optimisée pour regarder la surface ; d'autre part la réverbération de surface, surtout lorsque la mer est agitée, crée un signal parasite qui masque l'écho reçu de l'objet ; enfin ces sonars ne possèdent pas de dispositif de mesure d'immersion de la cible.

Il existe cependant un système sonar, destiné principalement à être monté sur un poisson remorqué, dans lequel plusieurs voies en "site" couvrant toute la hauteur d'eau, sont formées à la réception. Ce sonar étant principalement destiné à la détection, sa fréquence de fonctionnement est basse et par suite sa directivité n'est pas fine. La technique d'écartométrie, ou monopulse, sur les deux signaux de deux voies "site" adjacentes, est utilisée pour localiser un objet en site. Ce traitement est effectué pour chaque voie en gisement.

La technique d'écartométrie d'amplitude, ou monopulse d'amplitude, consiste à mesurer la différence et la somme des amplitudes de deux signaux reçus simultanément par deux voies adjacentes, dont les diagrammes de directivité sont identiques, de même centre de phase et pointés suivant deux directions différentes $O_1$ et $O_2$. Le rapport différence/somme permet alors d'obtenir la direction de l'écho par rapport à la direction moyenne $(O_1 + O_2)/2$. La direction de l'écho peut également être obtenue par écartométrie de phase en formant deux voies avec deux demi-antennes de façon à avoir des centres de phase décalés.

L'invention concerne un sonar qui est capable de détecter les échos provenant d'un objet sous-marin situé au voisinage de la surface de réduire la réverbération de surface par discrimination spatiale, de mesurer la profondeur d'immersion de l'objet d'avoir des diagrammes de rayonnements asservis aux mouvements du porteur, donc fixes par rapport à la verticale du lieu.

L'invention porte sur un sonar d'évitement d'objets sous-marins sub-surface, pour un bateau de surface, comportant une antenne acoustique d'émission et de réception, un dispositif d'émission, un dispositif de réception, selon la revendication 1.

D'autres particularités et avantages de l'invention apparaîtront clairement dans la description suivante donnée à titre d'exemple non limitatif et faite en regard des figures annexées :

- la figure 1 illustre la détection et la localisation en site des objets sous-marins sub-surface selon l'invention ;
- la figure 2 est le synoptique général d'un sonar, selon l'invention ;
- la figure 3 représente un exemple d'installation de l'antenne sur le bateau ;
- la figure 4 représente la zone couverte en gisement par le sonar à partir de deux antennes de réception décalées angulairement;
- la figure 5 illustre la mesure en gisement par formation de deux voies à partir de 6 colonnes de n transducteurs acoustiques ;
- la figure 6 est le synoptique d'une antenne acoustique comportant 6 colonnes de n transducteurs acoustiques ;
- la figure 7 : un exemple de visualisation des objets détectés.

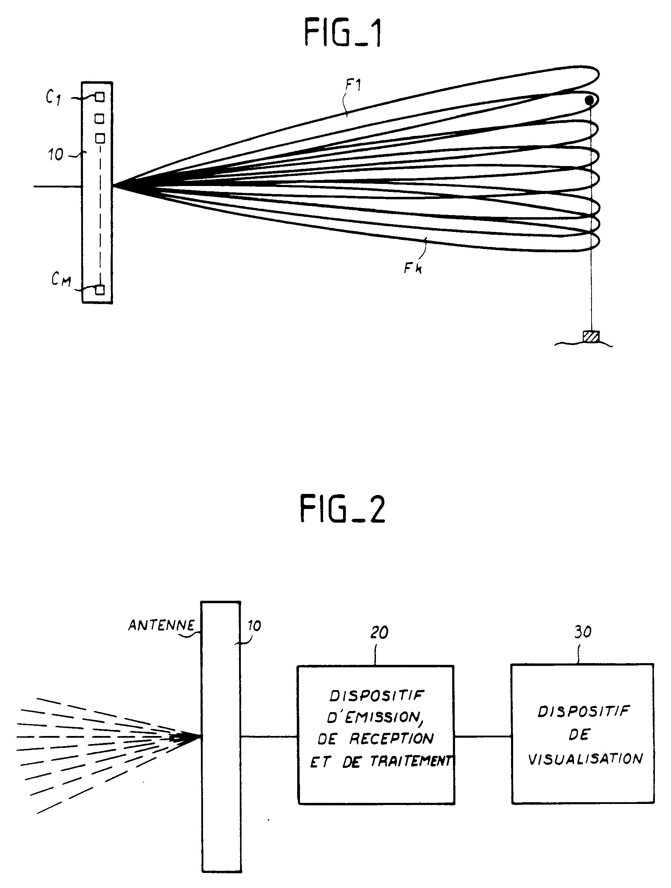

La figure 1 illustre, dans un plan vertical, la détection et la localisation en site des objets situés quelques mètres sous la surface de l'eau, selon l'invention, à l'aide d'une antenne acoustique, 10, placée verticalement par rapport à la surface de l'eau. Cette antenne comporte une colonne de n transducteurs acoustiques, ou capteurs, C1 à Cn, avec lesquels il est possible de former des lobes fins en site, faisceaux F1 à Fk, afin de découper l'espace finement dans le sens vertical. Grâce à la directivité spatiale ainsi obtenue, la réverbération de surface est minimisée et un objet situé près de la surface est détecté. Par ailleurs, la connaissance de l'immersion de l'antenne et du faisceau dans lequel se trouve l'objet détecté permettent de mesurer l'immersion de cet objet.

L'antenne acoustique étant préférablement fixée rigidement au porteur il est possible de stabiliser, dans l'espace, les faisceaux générés en site en réglant les phases des n transducteurs de l'antenne. Une antenne acoustique verticale comportant une colonne de n transducteurs acoustiques permet donc de détecter une cible et de mesurer son altitude, mais à l'intérieur de la zone insonifiée en gisement il n'est pas possible de déterminer ainsi sa position exacte. Pour localiser la cible en gisement, l'antenne verticale doit comporter au moins deux colonnes de n transducteurs de manière à pouvoir effectuer une mesure en gisement par la technique du monopulse. Pour couvrir un espace suffisant devant le porteur, la directivité de l'antenne en gisement doit être au moins égale à 30°.

Les deux colonnes de n transducteurs peuvent être décalées angulairement, de façon à avoir le même centre de phase mais des directions d'émission différentes, pour réaliser une mesure monopulse d'amplitude, ou elles peuvent être dans le même plan, de façon à avoir la même direction d'émission mais des centres de phase différents, pour réaliser une mesure de monopulse en phase.

Avec une antenne comportant plusieurs colonnes de n transducteurs, quelques lobes en gisement peuvent être générés afin d'effectuer une mesure fine en gisement par interpolation.

Les mesures en site et en gisement peuvent être effectuées simultanément ou séquentiellement. Il est également possible de former les lobes en site en permanence et de ne mettre en fonction la mesure monopulse que pour les faisceaux qui détectent une cible.

Le mouvement en lacet du porteur peut être compensé afin d'obtenir une mesure absolue en gisement.

A titre d'exemple, un sonar d'évitement d'objets sous-marins sub-surface, selon l'invention, pour assurer la protection d'un bateau contre d'éventuels objets se trouvant près de la surface a été réalisé. Ses caractéristiques ont été choisies de façon que la détection des objets soit réalisée entre 0 et 50m d'immersion, que la distance maximale de détection soit égale à 500m, que la distance de classification soit comprise entre 200 et 300m, que l'ouverture du faisceau en gisement soit égale à 30° (ce qui représente ± 125m de part et d'autre du bateau à 500m de distance) et que la résolution angulaire en vertical soit égale à 0,5°.

La classification correspond à la confirmation que la cible se trouve effectivement dans le volume d'eau situé entre 0 et 50m de profondeur et qu'il est possible de mesurer sa position avec une très bonne précision, soit ± 4m en horizontal et ± 2m en vertical. Le pouvoir de discrimination dans le sens vertical permet de distinguer éventuellement plusieurs composants de la cible, tels les flotteurs.

Comme indiqué sur le synoptique général de la figure 2, ce sonar se compose d'une antenne acoustique, 10, assurant les fonctions d'émission et de réception des signaux acoustiques, d'un dispositif d'émission, de réception et de traitement des signaux, 20, et d'un dispositif de visualisation, 30.

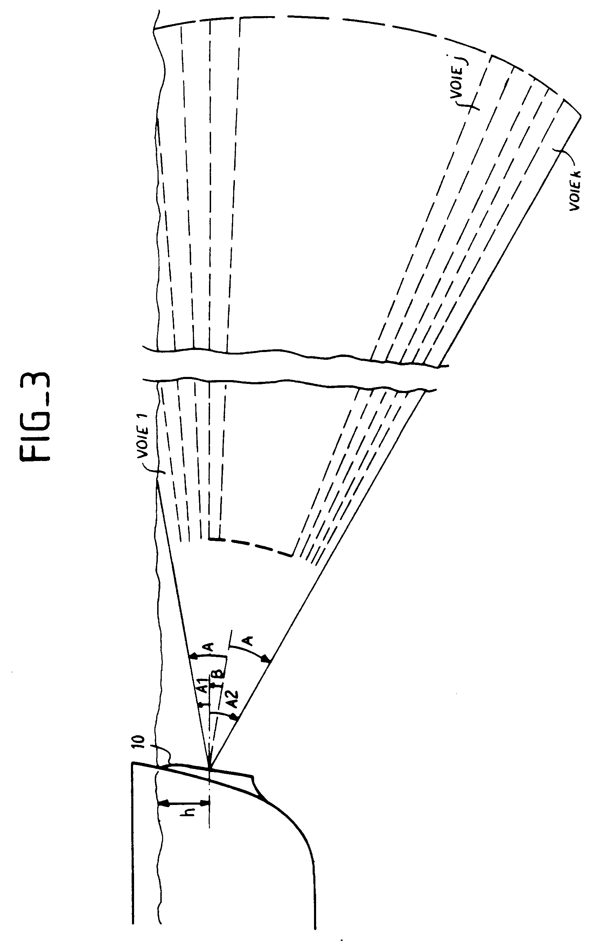

L'antenne acoustique, 10, est préférentiellement fixée rigidement au bateau, comme représenté sur la figure 3, de façon à ce que les mouvements angulaires du porteur puissent être compensés électroniquement par asservissement dans le dispositif d'émission, de réception et de traitement des signaux, 20. Un montage fixe de l'antenne sur le bateau est plus rapide et plus pratique à installer qu'un système à stabilisation mécanique. De plus, comme le montre la figure 3, l'antenne est installée de préférence sur l'étrave du navire, à une immersion moyenne h égale par exemple à 3m. Pour couvrir la zone dangereuse et conserver la cible dans le champ du sonar jusqu'à une distance proche, par exemple 50m, le sonar doit couvrir un secteur délimité par un angle A1 égal à 3° audessus de l'horizontale. De même, pour classifier, à 200m, un objet immergé à 30m de profondeur, le sonar doit couvrir un secteur délimité par un angle A2 égal à 9° au-dessous de l'horizontale. La zone couverte au total par le sonar est alors délimitée par un angle de 12° en vertical se décomposant en A = ±6° si l'inclinaison permanente de l'antenne est de B = 3° vers le bas lorsque le tangage du porteur est nul.

A l'émission, l'antenne va alors insonifier 12° en site et 30° en gisement. A la réception, une colonne de n transducteurs acoustiques va former après traitement, un nombre de voies k égal à 12°/0,5°, soit 24 voies en site, si chaque lobe couvre 0,5°. Pour éviter la formation de lobes images parasites, le nombre de transducteurs n a été choisi égal à 100 dans le sens vertical.

Pour obtenir la résolution requise égale à 0,5°, étant la longueur d'onde émise, la hauteur de l'antenne doit être égale à 100 , soit approximativement un mètre si la fréquence de travail est de 150 kHz, choix compatible avec la portée maximale de 500m.

La fonction mesure de la position de l'objet en gisement peut être réalisée de différentes façons, par exemple, par l'utilisation de deux antennes d'émission décalées angulairement, chacune ayant une fréquence d'émission particulière. La discrimination et la mesure monopulse sont ensuite réalisées en réception après séparation des fréquences (il s'agit alors d'une mesure monopulse d'amplitude).

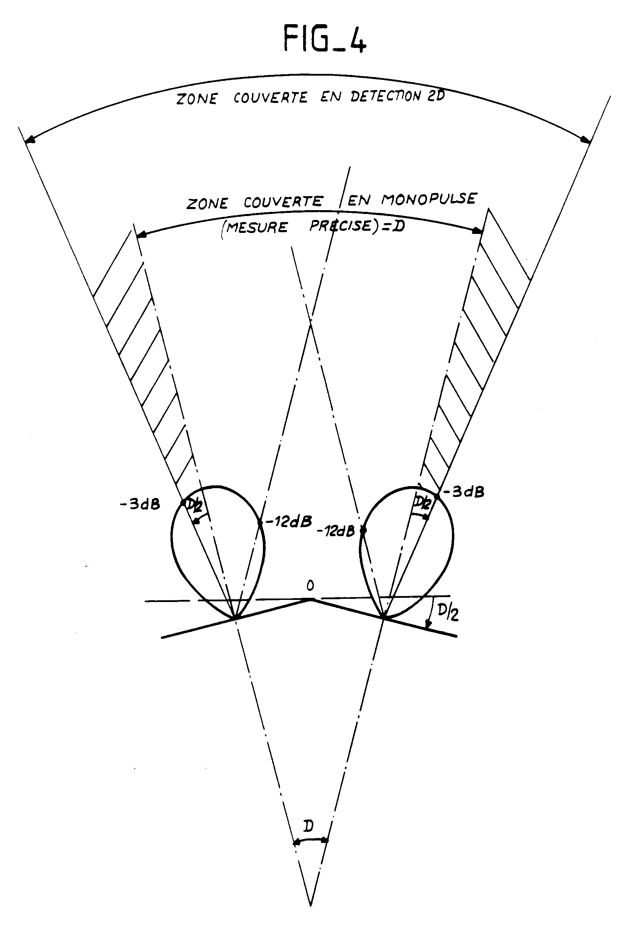

Une deuxième façon de réaliser une mesure en gisement est d'effectuer une mesure monopulse d'amplitude à partir de deux antennes de réception décalées angulairement ce qui permet d'obtenir des résultats satisfaisants avec un dispositif relativement simple et de coût réduit. Les antennes de réception sont alors constituées de deux colonnes de n transducteurs disposées suivant deux plans inclinés faisant chacun un angle D/2 par rapport au plan horizontal comme le montre la figure 4 qui représente la couverture totale du sonar en gisement dans ce cas, en admettant que la mesure sur les flancs des diagrammes est possible jusqu'à -12dB. Deux lobes en gisement sont obtenus par la directivité propre de chacune des deux antennes, les diagrammes de directivité ayant le même centre de phase et étant pointés dans des directions faisant un angle D entre elles. La couverture totale du sonar comporte trois zones :

- la zone centrale d'ouverture D dans laquelle la mesure monopulse est réalisable car les niveaux de réception sont compris entre 0 et - 12dB sur les deux voies (le signal dans l'axe est égal à -3dB sur les deux voies) ;
- les zones hachurées à gauche et à droite dans lesquelles la détection est possible mais la mesure monopulse est impossible. Dans ces zones hachurées, caractérisées par une différence de niveaux sur les voies supérieure à 12dB, il est possible d'utiliser la détection comme une alarme, le bateau pouvant alors soit se diriger sur l'alarme pour la placer dans le secteur D et la classifier, soit tourner dans le sens contraire pour l'éviter.

Dans le cas de deux antennes de réception décalées angulairement, le secteur de détection du sonar a donc une largeur angulaire égale à 2 D, la mesure fine étant effectivement réalisée dans un secteur de largeur angulaire D. L'angle D est choisi de façon à éviter d'avoir un zéro sur une des voies et à couvrir toute la zone dangereuse. Par exemple, l'angle D est compris entre 30° et 45°.

Enfin, il est également possible de réaliser une mesure en gisement en formant, en réception, deux voies à partir de quelques colonnes de n transducteurs. Dans ce cas, pour couvrir un secteur de 30°, les deux voies de réception en gisement auront, par exemple, des angles d'ouverture D = 15° et seront séparées d'un angle D = 15°.

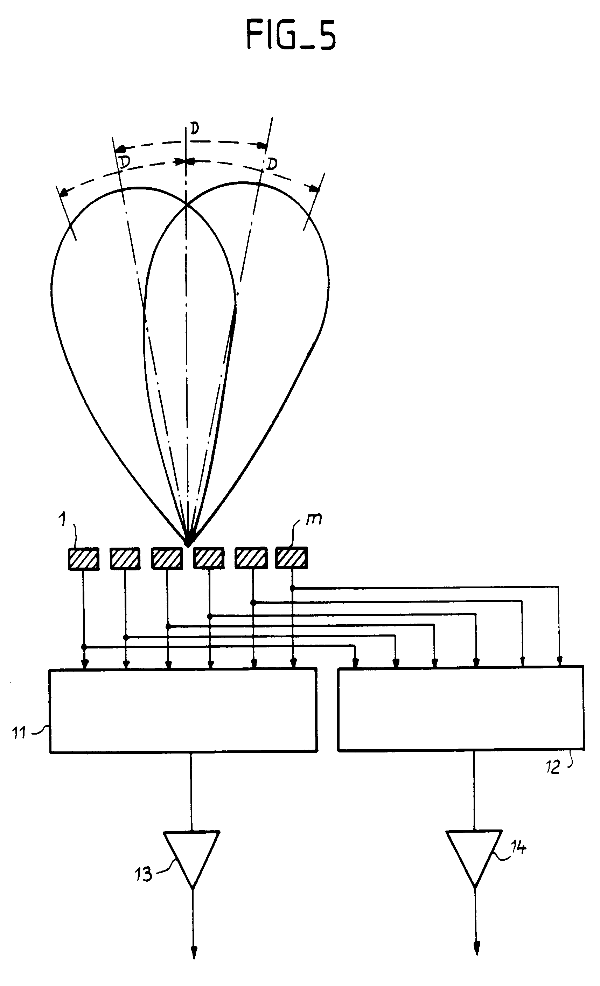

Sur la figure 5, qui représente la formation de deux voies à partir de 6 colonnes de n transducteurs dans un plan horizontal, il a été représenté $m = 6$ capteurs horizontaux appartenant à 6 colonnes différentes de n capteurs. Les signaux issus de ces 6 capteurs sont déphasés et sommés dans les circuits déphaseurs-sommateurs, 11 et 12, de manière à former les deux voies en gisement. C'est à partir de ces deux voies en gisement que se fait le calcul de la position en gisement de l'objet détecté, par la méthode du monopulse (en phase et/ou en amplitude) dans le dispositif 20 d'émission, de réception et de traitement. Les sorties des circuits déphaseurs-sommateurs, 11 et 12, sont reliés à des pré-amplificateurs, 13 et 14, à gain variable dans le temps, de façon à normaliser le signal. Ce traitement est appliqué à tous les transducteurs de l'antenne.

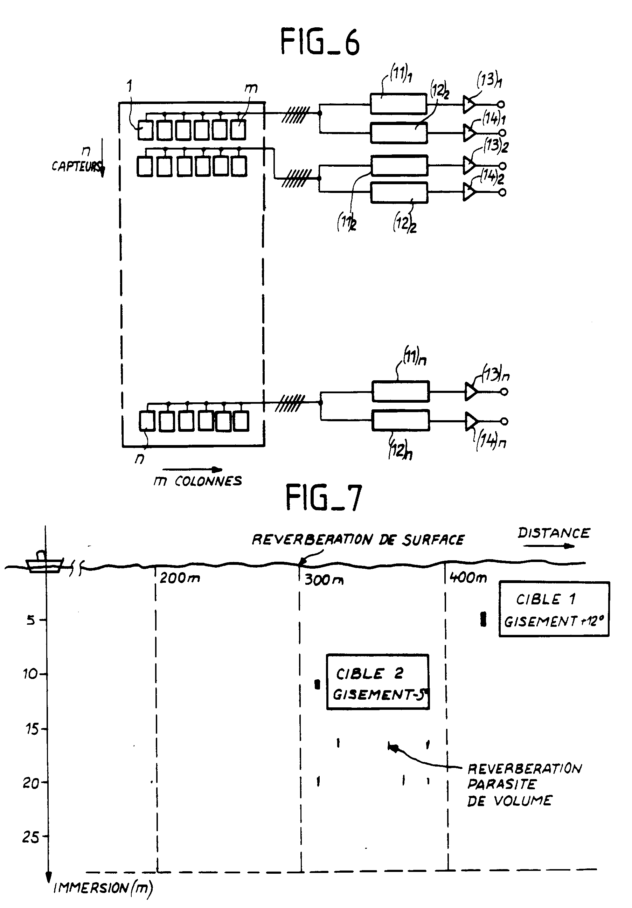

La figure 6 représente le synoptique d'une antenne acoustique comportant 6 colonnes de n transducteurs acoustiques. Ainsi, comme il est représenté sur cette figure, l'antenne,10, comprend pour la réception, $m = 6$ colonnes de n capteurs acoustiques, 2n circuits déphaseurs-sommateur, $(11)_1$ à $(11)n$, et, $(12)_1$ à $(12)n$, et 2n pré-amplificateurs, $(13)_1$ à $(13)n$, et, $(14)_1$ à $(14)n$. A l'émission seulement 3 colonnes de n capteurs sont utilisées pour couvrir l'espace d'ouverture angulaire 12° en site et 30° en gisement.

Le dispositif d'émission, de réception et de traitement, 2, est placé à une distance quelconque de l'antenne, 10 ; il possède les fonctions suivantes :

- la génération électrique du signal d'émission. Ce signal d'émission est impulsionnel de manière à pouvoir discriminer des cibles placées à des distances différentes. La durée d'émission est comprise entre 0,2 et 1ms.

- la réception des signaux issus des 2n préamplificateurs avec dans l'ordre, les traitements classiques en technique sonar tels que l'amplification et le filtrage du signal, la démodulation, la numérisation, la compensation des mouvements du porteur en déphasant les capteurs proportionnellement au tangage du porteur, la formation des deux fois 24 voies en site (à ce stade les voies sont stabilisées), le traitement monopulse phase et/ou amplitude sur des cibles désignées et l'interfaçage avec le dispositif de visualisation, 30.

Plusieurs présentations des résultats sont possibles, parmi lesquelles, par exemple, la distance et la profondeur d'immersion sont représentées respectivement en axe des x et des y. Une autre présentation consiste, par exemple, à utiliser un extracteur automatique des cibles qui fournit à l'opérateur une alarme et sa position lorsqu'il y a détection d'une cible.

La figure 7 représente un exemple d'écran de visualisation où sont combinées les deux présentations précédentes, et qui permet d'avoir sur le même diagramme une superposition de la visualisation de l'information brute d'une part, et d'autre part l'extraction de la cible et l'affichage de ses coordonnées.

L'invention n'est pas limitée aux modes de réalisation précisémment décrits ci-dessus. En particulier, le mode de réalisation détaillé représenté sur la figure 6 est complet et reste de coût acceptable, mais il est possible de le simplifier si l'on accepte une diminution de la résolution du nombre de voies préformées ou si l'on se contente d'une mesure en gisement relativement peu précise, la caractéristique essentielle de l'invention étant une mesure précise en site.

**Revendications**

1. Sonar d'évitement d'objets sous-marins subsurface, pour un bateau de surface, comportant une antenne acoustique (10) d'émission et de réception, un dispositif d'émission (20) et un dispositif de réception (30), caractérisé en ce que :

   - l'antenne acoustique (10) comporte au moins deux colonnes verticales comprenant chacune n transducteurs (C1-Cn) acoustiques

   - le dispositif d'émission permet d'alimenter l'antenne par un signal impulsionnel de manière à pouvoir insonifier une zone à risques de collision située au voisinage et en dessous de la surface de la mer à l'avant du bateau et sur sa trajectoire ;

- le dispositif de réception permet de traiter les signaux des transducteurs pour former d'une part en site dans le secteur insonifié un ensemble de voies fines (F1-FK) permettant de déterminer l'immersion d'un objet détecté dans une voie et dont la finesse est en relation avec la précision de la mesure en site souhaitée ; et le dispositif de réception permet également de traiter les signaux des transducteurs pour réaliser en gisement dans le secteur insonifié une mesure monopulse permettant de déterminer le gisement dudit objet détecté en site.

2. Sonar selon la revendication 1, caractérisé en ce que l'antenne acoustique (10) permet d'insonifier à l'émission en gisement un secteur ayant une ouverture angulaire au moins égale à 30°.

3. Sonar selon l'une quelconque des revendications 1 et 2, caractérisé en ce que l'antenne acoustique (10) est fixée rigidement au bateau à une immersion h égale à quelques mètres et inclinée vers le bas, par rapport à un plan horizontal, d'un angle B égal à quelques degrés.

4. Sonar selon la revendication 3, caractérisé en ce qu'il comporte des moyens d'asservissement des diagrammes de rayonnement aux mouvements du bateau.

5. Sonar selon l'une quelconque des revendications 1 à 4 caractérisé en ce que les directions d'émission des deux colonnes de transducteurs sont identiques pour réaliser, en gisement, une mesure monopulse en phase.

6. Sonar selon l'une quelconque des revendications 1 à 4, caractérisé en ce que les directions d'émission des deux colonnes de transducteurs font un angle D compris entre 30° et 45° pour réaliser en gisement une mesure monopulse en amplitude.

7. Sonar selon l'une quelconque des revendications 1 à 4, caractérisé en ce que l'antenne acoustique (10) comporte m colonnes de n transducteurs acoustiques pour former plusieurs lobes en gisement et réaliser une mesure monopulse plus précise qu'avec deux lobes.

8. Sonar selon l'une quelconque des revendications 1 à 7, caractérisé en ce que les moyens de réception permettent d'effectuer des mesures en site et en gisement simultanées.

9. Sonar selon l'une quelconque des revendications 1 à 7, caractérisé en ce que les moyens de réception permettent d'effectuer des mesures en site et en gisement séquentielles.

10. Sonar selon l'une quelconque des revendications 1 à 7, caractérisé en ce que les moyens de réception permettent de former des voies en site en permanence et permettent de n'effectuer la mesure monopulse en gisement que pour les voies site dans lesquelles on a détecté un objet.

**Claims**

1. Sonar for avoiding sub-surface under-sea objects, for a surface boat, including a transmitting and receiving acoustic antenna (10), a transmitting device (20) and a receiving device (30), characterized in that:
   - the acoustic antenna (10) includes at least two vertical columns each comprising n acoustic transducers (C1-Cn).
   - the transmitting device makes it possible to feed the antenna with a pulsed signal so as to be able to insonify a collision-risk zone situated in the vicinity of and beneath the surface of the sea ahead of the boat and in its path;
   - the receiving device makes it possible to process the signals from the transducers so as to form on the one hand in elevation within the insonified sector a set of fine pathways (F1-FK) making it possible to determine the submersion of an object detected in a pathway and the fineness of which is related to the desired accuracy of the elevation measurement; and the receiving device makes it possible likewise to process the signals from the transducers so as to make a monopulse measurement in bearing within the insonified sector making it possible to determine the bearing of the said object detected in elevation.

2. Sonar according to Claim 1, characterized in that the acoustic antenna (10) makes it possible to insonify on transmission in bearing a sector having an angular aperture at least equal to 30°.

3. Sonar according to either one of Claims 1 and 2, characterized in that the acoustic antenna (10) is fixed rigidly to the boat at a submersion h equal to a few metres and sloping downwards, with respect to a horizontal plane, by an angle B equal to a few degrees.

4. Sonar according to Claim 3, characterized in that it includes means for servocontrolling the radiation diagrams to the motions of the boat.

5. Sonar according to any one of Claims 1 to 4, characterized in that the transmitting directions of the two columns of transducers are identical so as to make, in bearing, a monopulse measurement in phase.

6. Sonar according to any one of Claims 1 to 4, characterized in that the transmitting directions of the two columns of transducers make an angle D of between 30° and 45° so as to make in bearing a monopulse measurement in amplitude.

7. Sonar according to any one of Claims 1 to 4, characterized in that the acoustic antenna (10) includes m columns of n acoustic transducers so as to form several lobes in bearing and so as to make a more accurate monopulse measurement than with two lobes.

8. Sonar according to any one of Claims 1 to 7, characterized in that the receiving means make it possible to perform simultaneous measurements in elevation and in bearing.

9. Sonar according to any one of Claims 1 to 7, characterized in that the receiving means make it possible to perform sequential measurements in elevation and in bearing.

10. Sonar according to any one of Claims 1 to 7, characterized in that the receiving means make it possible to form pathways in elevation permanently and make it possible to perform the monopulse measurement in bearing, only for the elevation pathways in which an object has been detected.

**Patentansprüche**

1. Sonargerät zur Vermeidung von Hindernissen unter dem Wasserspiegel für ein Schiff, mit einer akustischen Sende- und Empfangsantenne (10) und mit einer Vorrichtung (20) zum Senden und Empfangen, dadurch gekennzeichnet, daß
   - die akustische Antenne (10) mindestens zwei senkrechte Spalten mit je n akustischen Sonden (C1 bis Cn) enthält,
   - die Sendevorrichtung eine Antenne mit einem Impulssignal speisen kann, so daß eine kollisionsgefährdete Zone in der Nähe und unterhalb des Wasserspiegels vor dem Schiff und auf seinem Weg beschallt wird,
   - die Empfangsvorrichtung die Verarbeitung der Sondensignale erlaubt, um einerseits in Elevationsrichtung in dem beschallten Sektor eine Anzahl von feinen Kanälen (F1 bis Fk) zu bilden, mit denen die Tauchtiefe eines erfaßten Objekts in einem Kanal bestimmt werden kann, wobei die Feinheit des Kanals mit der gewünschten Genauigkeit der Messung in Elevationsrichtung in Beziehung steht, wobei die Empfangsvorrichtung auch die Verarbeitung der Sondensignale erlaubt, um in Seitenpeilrichtung in dem beschallten Sektor eine Einzelimpulsmessung durchzuführen, die die Ortung des Hindernisses in Seitenpeilrichtung erlaubt.

2. Sonargerät nach Anspruch 1, dadurch gekennzeichnet, daß die akustische Antenne (10) sendeseitig in Seitenpeilrichtung einen Sektor beschallen kann, dessen Öffnungswinkel mindestens gleich 30° ist.

3. Sonargerät nach einem beliebigen der Ansprüche 1 und 2, dadurch gekennzeichnet, daß die akustische Antenne (10) starr auf dem Schiff in einer Tauchtiefe h von einigen Metern befestigt ist, und zwar um einen Winkel B von einigen Graden nach vorne geneigt bezüglich einer waagrechten Ebene.

4. Sonargerät nach Anspruch 3, dadurch gekennzeichnet, daß es Mittel zur Nachregelung der Strahlungsdiagramme bezüglich der Bewegungen des Schiffes besitzt.

5. Sonargerät nach einem beliebigen der Ansprüche 1 bis 4, dadurch gekennzeichnet, daß die Senderichtungen der beiden Spalten von Sonden identisch sind, so daß in Seitenpeilrichtung eine Einzelimpulsmessung nach Phase erfolgt.

6. Sonargerät nach einem beliebigen der Ansprüche 1 bis 4, dadurch gekennzeichnet, daß die Senderichtungen der beiden Spalten von Sonden einen Winkel D zwischen 30 und 45° einschließen, um in Seitenpeilrichtung eine Einzelimpulsmessung nach Amplitude durchzuführen.

7. Sonargerät nach einem beliebigen der Ansprüche 1 bis 4, dadurch gekennzeichnet, daß die akustische Antenne (10) m Spalten von n akustischen Sonden besitzt, um mehrere Keulen in Seitenpeilrichtung zu bilden und eine genauere Einzelimpulsmessung durchzuführen als mit zwei Keulen.

8.  Sonargerät nach einem beliebigen der Ansprüche 1 bis 7, dadurch gekennzeichnet, daß die Empfangsmittel gleichzeitig Messungen in Elevations- und Seitenpeilrichtung durchzuführen erlauben.

9.  Sonargerät nach einem beliebigen der Ansprüche 1 bis 7, dadurch gekennzeichnet, daß die Empfangsmittel nacheinander Messungen in Elevations- und Seitenpeilrichtung durchzuführen erlauben.

10. Sonargerät nach einem beliebigen der Ansprüche 1 bis 7, dadurch gekennzeichnet, daß die Empfangsmittel Kanäle in Elevationsrichtung permanent zu bilden erlauben und die Einzelimpulsmessung in Seitenpeilrichtung nur für diejenigen Elevationskanäle durchführen, in denen ein Objekt erfaßt worden ist.

## FIG_1

## FIG_2

# FIG_3

VOIE 1

VOIE j

VOIE k

h

10

A1

A2

B

A

A

EP 0 397 547 B1

FIG_4

# FIG_5

## FIG_6

## FIG_7